# EUROPÄISCHE PATENTSCHRIFT

(11) **EP 0 577 677 B1**
(45) Veröffentlichungstag und Bekanntmachung des Hinweises auf die Patenterteilung: **09.11.1994**
(21) Anmeldenummer: 92907493.8
(22) Anmeldetag: 27.03.1992
(51) Int. Cl.: A62D 3/00, B01D 53/34, F23G 7/00

(54) **VERFAHREN ZUR REDUZIERUNG DER SCHADSTOFFANTEILE IM RAUCHGAS THERMISCHER PROZESSE**
PROCESS FOR REDUCING THE POLLUTING CONTENT OF THE FLUE GAS FROM THERMAL PROCESSES
PROCEDE DE REDUCTION DE LA TENEUR EN SUBSTANCES POLLUANTES DE GAZ DE FUMEE DEGAGES PENDANT DES PROCESSUS THERMIQUES

(30) Priorität: 27.03.1991 DE 4109991
(43) Veröffentlichungstag der Anmeldung: 12.01.1994
(73) Patentinhaber: METALLWARENFABRIK STOCKACH GmbH, D-78329 Stockach (DE)
(72) Erfinder: GLATT, Wulf, D-7768 Stockach 1 (DE); GLATT, Wilfried, D-7768 Stockach 1 (DE); RADKE, Dietrich, D-4030 Ratingen 5 (DE)
(74) Vertreter: Vomberg, Friedhelm, Dipl.-Phys.
(86) Internationale Anmeldenummer: DE9200248
(87) Internationale Veröffentlichungsnummer: WO9217245

(56) Entgegenhaltungen:
- EP-A- 0 070 789
- CH-A- 670 959
- DE-A- 2 241 623
- DE-A- 3 615 027

## Beschreibung

Die Erfindung betrifft ein Verfahren zur Reduzierung der Schadstoffanteile im Rauchgas thermischer, unter Anwesenheit einer oxidierenden Gasphase kohlenstoff- und wasserstoffhaltige sowie halogenhaltige Brennstoffe verfeuernder Prozesse, insbesondere des Aluminiumumschmelzverfahrens, vorzugsweise zur Minimierung von gasförmigen, flüssigen und festen Dioxinen, Furanen, Halogenen oder halogenhaltigen Stoffen, wobei im Verbrennungsprozeß halogenaffine Metalle und/oder deren Oxide, Hydroxide und/oder Oxihydroxide feinteilig in die Heizflamme eingebracht werden und die den Verbrennungsraum verlassenden Rauchgase unter Wärmeentzug gereinigt werden.

Die Erfindung betrifft ferner eine Vorrichtung zur Verbrennung und anschließender Rauchgasreinigung zur Durchführung des genannten Verfahrens, die aus einem mit einem Brenner versehenen Brennraum, Zuführeinrichtungen für weitere feste, flüssige und gasförmige Brennstoffe sowie einer nachgeschalteten Einrichtung zur Rauchgasreinigung besteht.

Das vorgenannte Verfahren ist prinzipiell aus der DE 36 15 027 A1 bekannt. Dieses Verfahren bezieht sich auf die Zerstörung und Umsetzung von in flüssigen, gasförmigen und festen Abfällen enthaltenen organischen Halogenverbindungen, insbesondere von chlorierten Biphenylen (PCB), chlorierten Aromaten und chlorierten Phenolen, sowie den bei Teiloxidation entstehenden polychlorierten Furanen (PCDF) und polychlorierten Dioxinen (PCDD), die bereits in geringen Konzentrationen äußerst giftig sind. Die zugegebenen halogenaffinen Metalle und/oder deren Oxide bzw. Hydroxide tragen erheblich zur Erniedrigung der die Bildung von Dioxinen und Furanen begünstigenden Halogenaktivität bei, so daß von vornherein die Bildung von PCDF und PCDD oder anderer halogenhaltiger Verbindungen vermieden wird. Nachteilig bei diesem Prozeß ist jedoch der durch die eingebrachten Zusätze und den Prozeß belastende hohe Staubanteil, der in nachgeschalteten Filteranlagen, beispielsweise Gewebefiltern niederschlägt.

Die Rauchgasreinigung beschäftigte sich zunächst primär mit der Beseitigung von Stäuben, Kohlenmonoxid, Schwefeldioxid und Stickoxiden. So wurden zur Rauchgasentschwefelung Naßverfahren, Halbnaßverfahren und Trockenverfahren entwickelt, bei denen vorwiegend als Absorptionsmittel entweder Brantkalk oder Calciumhydroxid verwendet werden. Bei der Entschwefelung mit Kalk werden die Rauchgase nach der Entstaubung im Elektro- oder Gewebefilter durch Sprühturmwäscher geführt und im Gegenstrom zur kalkhaltigen Waschlösung geleitet. Nur wenn die Nachrüstung der geschilderten Nachreinigungsanlage, z.B. bei Altanlagen nicht oder nur unter großem Aufwand möglich war, werden Calciumverbindungen unmittelbar in den Brennraum gegeben, allerdings ebenfalls mit dem Nachteil des hohen Staubanteiles in den Abgasen. Es ist auch bereits vorgeschlagen worden, Sprühabsorber zur Rauchgasreinigung derart einzusetzen, daß ein alkalisches Absorptionsmittel, wie Calciumhydroxid, unmittelbar in eine Absorptionskammer auf das dort durchgeleitete Rauchgas gesprüht wird. Die absorbierten Bestandteile müssen anschließend über eine Staubabscheidung in Elektro- oder Gewebefiltern (ggf. nach Trocknung) abgeschieden werden.

Die NO_{X}-Abscheidung erwies sich hingegen als wesentlich schwieriger. Soweit es in der Vergangenheit nicht möglich war, den Stickoxid-Anfall durch verfahrenstechnische Maßnahmen bei der Verbrennung, z.B. feuerungstechnische Maßnahmen, zu begrenzen, konnte eine Stickoxidminderung im Rauchgas beispielsweise durch selektive katalytische Reduktion erreicht werden, wobei der NO_{X}-Gehalt mit Ammoniak an Katalysatoren in die Bestandteile Stickstoff und Wasserdampf umgesetzt bzw. reduziert wird.

Erst in jüngerer Zeit hat man sich verstärkt der Reduzierung von Halogenverbindungen sowie Dioxinen und Furanen zugewendet. Dioxine und Furane entstehen vornehmlich im Temperaturbereich zwischen 250°C und 700°C in einer oxidierenden Atmosphäre. Dioxine und Furane liegen unterhalb dieser Temperatur vorwiegend in Form von Anlagerungen an Festkörperteilchen (Staub) vor. Mit zunehmender Temperatur erhöht sich deren Dampfdruck, so daß mit zunehmender Temperatur im Existenzbereich der Dioxine und Furane deren gasförmiger Anteil steigt.

Wie bereits zur Reduzierung von Schwefeldioxid und Stickoxiden vorgeschlagen, sind auch zur Absorption von dioxin- und furanhaltigen Gasen Aktivkohle oder -koks vorgeschlagen worden. Zum Teil sind auch Aktivkohle oder aktivem Braunkohlenkoks Adsorptionsmittel, wie feinteiliger Kalk und/oder Kalkhydrat, zugesetzt worden. Nachteilig bei diesen Verfahren ist jedoch die aufwendige Entsorgung der entsprechenden Kohle- bzw. Koksfilter. Ein weiterer Nachteil der Verwendung solcher Filter besteht darin, daß bei Entzündung oder einem Schwelbrand der Aktivkohle oder des aktiven Braunkohlenkokses Maßnahmen ergriffen werden müssen, die diese Filter für eine längere Zeit zum Ausfall bringen, so daß ein Stillstand der Verfeuerungsanlage nur dann vermieden werden kann, wenn eine zweite parallelgeschaltete Rauchgasfilteranlage bereitsteht.

Zur Entsorgung bzw. Dekontamination von Dioxinen und/oder Furanen in flüssigen oder festen Abfallprodukten ist auch schon vorgeschlagen worden, die kontaminierten Abfallprodukte bei Sauerstoffmangel (mit Sauerstoffwerten < 1 %) über eine Zeit von 2 Stunden in einer Trommel bei Temperaturen um etwa 300 bis 400°C zu halten und anschließend die Stoffe in einer weiteren Trommel abzukühlen. Diese Dekontamination ist jedoch sehr aufwendig und erfordert eine relativ lange Behandlungszeit.

Eine weitere Möglichkeit zur Senkung von Dioxinen und Furanen im Abgas aus thermischen Prozessen ist darin gesehen worden, durch Einsatz von Katalysatoren, wie z.B. Oxiden von Titan und/oder Eisen sowie Anteilen von Oxiden von z.B. Wolfram, Vanadin, Molybdän, Nickel und Chrom, bei Temperaturen zwischen 250°C und 400°C einen Zerfall der Dioxine und Furane unter oxidierenden Bedingungen zu erreichen, insbesondere, wenn dem zu reinigenden Abgas vorher Ammoniak oder Stoffe wie Harnstoff, Ammoniakwasser oder andere bei entsprechenden Temperaturen NH₃ abgebenden Stoffe zugesetzt werden. So kann z.B. Ammoniakwasser bei 320°C einem vorgereinigten Abgas vor dem genannten Katalysator zugesetzt werden. Diese Katalysatoren haben zwar den Vorteil, daß sie zugleich eine Minderung der Stickoxide bewirken, allerdings müssen sie zur ausreichenden Absenkung des Dioxin- und Furan-Gehaltes im Abgas flächenmäßig erheblich vergrößert werden, so daß zusätzliche Aufwendungen und Kosten entstehen.

Des weiteren ist auch schon versucht worden, mit Ammoniak ohne einen zusätzlichen Katalysatoreinsatz eine Absenkung von Stickoxiden, Dioxinen und Furanen bei Temperaturen zwischen 850°C und 1100°C zu erreichen. Dieses Verfahren hat jedoch den Nachteil, daß je nach Temperatur und Ammoniak-Konzentration im Abgas korrodierende Ablagerungen in Form von Ammoniumbisulfat abgeschieden werden, so daß eine entsprechende Auskleidung der Rauchgasreinigungsanlage erforderlich ist. Im übrigen ist auch die Reduzierung der Dioxin- und Furan-Werte unter Berücksichtigung der jüngsten, vom Gesetzgeber geforderten Abgaswerte nicht ausreichend, so daß ein Zusatz von Adsorptionsmitteln, wie z.B. ein Gemisch von Aktivkohle und Kalkhydrat, bei nachgeschalteten Schlauchfiltern erforderlich ist, um eine ausreichende Entsorgung bzw. Rauchgasreinigung zu erzielen. Dies wiederum verteuert die Rauchgasreinigung durch erheblichen technischen Aufwand, insbesondere ist die Schwelbrandgefahr der eingesetzten Aktivkohle auch unter diesen Bedingungen immer noch nachteilig.

Ausgehend von dem eingangs genannten Stand der Technik ist es daher Aufgabe der vorliegenden Erfindung, die Schadstoffgehalte im Rauchgas weitgehend zu minimieren, ohne erhöhte Staubbelastungen der Abgase oder im Verbrennungsraum in Kauf nehmen zu müssen. Insbesondere soll der derzeitig vorgebbare Wert von 0,1 ng/m³ an Dioxine- und/Furangehalt im Abgas deutlich unterschritten werden. Weiterhin ist es Aufgabe der Erfindung, eine möglichst aus bekannten Anlageteilen bestehende Vorrichtung zur Verbrennung und Rauchgasreinigung zu schaffen, die einen geringen apparativen Aufwand erforderlich macht.

Die auf das Verfahren bezogene Aufgabe wird durch die im Anspruch 1 angegebenen Maßnahmen gelöst.

Vorteilhafterweise nutzt dieses Verfahren diejenigen Maßnahmen aus, die prinzipiell in der DE 36 15 027 beschrieben werden, jedoch wird die Menge der halogenaffinen Metalle und/oder deren Oxide, Hydroxide und/oder Oxihydroxide auf eine Menge begrenzt, die nur um 1 bis 10 % über der Menge liegt, die stöchiometrisch zur Umsetzung und mineralischen Abbindung von Halogenen und/oder Halogenwasserstoffen in Gegenwart anderer Reaktionspartner wie SO₂ im Abgas erforderlich ist.

Bei im Abgas gegebenen Umsatz- und Kontaktbedingungen reichen diese Zusatzmengen noch nicht aus, um die Bildung von Dioxinen und Furanen auf die vom Gesetzgeber geforderten Grenzwerte zu senken, doch werden erhebliche Halogenanteile zu Halogeniden mineralisiert und stehen nicht mehr zur Bildung organischer Halogenverbindungen zur Verfügung. Dies ist insbesondere von Bedeutung, wenn in den Ersatzstoffen des Prozesses bereits Dioxine und/oder Furane enthalten sind. Hierdurch wird eine erhebliche Reduzierung des Staubanteiles erreicht im Vergleich zu den bei dem bekannten Verfahren erforderlichen Mengen, wenn ausschließlich durch diese Maßnahme die entsprechenden Dioxine- und Furanwerte auf das vom Gesetzgeber vorgeschriebene Maß abgesenkt werden sollen. Die im Rauchgas verbleibenden Schadstoffe werden anschließend mit einer nicht zündfähigen Öl-Wasser-Emulsion besprüht, bis die vorgebbaren Höchstwerte an Schadstoffgehalten im Rauchgas unterschritten werden. Prinzipiell ist es zwar möglich, eine Absorption von insbesondere Dioxinen und Furanen mit reinem Öl durchzuführen, jedoch ist dann nicht auszuschließen, daß bei Durchbruch heißer Prozeßgase bis zur Ölwäsche eine Zündung und Verpuffung des Öles auftreten kann, so daß weitere Sicherungsmaßnahmen zwischen dem Verbrennungsraum und der Ölabsorption zu treffen sind. Diese Maßnahmen können eingespart werden, wenn die Öl-Wasser-Emulsion so in der Zusammensetzung eingestellt wird, daß bei der jeweils herrschenden Abgastemperatur Verbrennungen und Verpuffungen ausgeschlossen werden können. Vorzugsweise besitzt die Öl-Wasser-Emulsion ein Öl-Wasser-Volumen-Verhältnis von 0,01 bis 90. Je niedriger die Ölphase der genannten Emulsion ist, desto länger muß die Behandlungsstrecke gewählt werden, was verfahrenstechnisch auch in der Weise möglich ist, daß die Abgase mehrfach eine Reihe oder parallelgeschaltete Sprühdüsen durchlaufen. Weiterhin vorzugsweise wird der Emulsion ein Emulgator zugesetzt, um die Herstellung und Erhaltung der Emulsion zu begünstigen.

Nach einer Weiterbildung der Erfindung wird die nach Absorption der Schadstoffe, insbesondere der Furan- und/oder Dioxinbestandteile, vorliegende Emulsion in eine die Schadstoffe enthaltende Ölphase (oder ölreiche Phase) und eine wässrige Phase getrennt, was vorzugsweise in einer Zentrifuge geschehen kann. Vorzugsweise werden zwischen 10 bis 95 % des schadstoffbelasteten Ölanteiles der Emulsion abgetrennt, der ursprünglich in die Emulsion gegeben worden ist.

Nach einer weiteren Ausgestaltung der Erfindung wird die abgetrennte schadstoffbelastete Ölphase (oder ölreiche Phase) ganz oder teilweise als Brennstoff in die Verbrennungskammer geführt und dort verbrannt. Die abgetrennte wässrige Phase wird vorzugsweise erneut zur Bildung einer frischen Öl-Wasser-Emulsion in den Prozeß zurückgeführt bzw. in besonderer Ausgestaltung der Erfindung, insbesondere bei Kondensation von Wasser aus den Rauchgasen und Übergang in die Emulsion, mit den dann enthaltenen Feststoffanteilen der Waschflüssigkeit eines vorgeschalteten, nach bekanntem Verfahren arbeitenden Wäscher zur Abscheidung des Staubes aus den Abgasen zugeführt, um den umlaufenden Wasseranteil konstant zu halten. Der nach Abtrennung der schadstoffbelasteten ölreichen Phase sowie der wässrigen Phase verbleibende Emulsionsrest wird vorzugsweise durch entsprechende Zufuhr von Öl und/oder Wasser auf das gewünschte Öl-Wasser-Verhältnis aufgefüllt, ggf. wird ein Emulgator zugesetzt, bevor die so erhaltene Emulsion in der beschriebenen Weise zum Besprühen des Rauchgases verwendet wird.

Vorzugsweise werden die schadstoffbelasteten Rauchgase nach Durchlaufen eines vorgeschalteten Filters zur Vorabtrennung des im Abgas enthaltenen Staubes in einem an sich bekannten und mit einem Naßfilter bzw. Naßfilterpackungen bestückten Aerosolabscheider mit der genannten Öl-Wasser-Emulsion besprüht, bevor sie den Naßfilter bzw. die Naßfilterpackungen durchlaufen. Mit anderen Worten, in dem nachgeschalteten Aerosolabscheider befinden sich eine oder mehrere Sprühdüsen jeweils in einem Leerraum unterhalb eines in Strömungsrichtung nachfolgenden Naßfilters, wobei das Rauchgas ggf. mehrfach den Sprüh- und/oder Filterprozeß durchlaufen kann.

Nach einer weiteren Ausgestaltung der Erfindung werden die Rauchgase, bevor sie in den genannten Aerosolabscheider geleitet bzw. dem Besprühen mit der Öl-Wasser-Emulsion unterzogen werden, einer Naßreinigung, vorzugsweise in einem Venturiwäscher in nach dem Stand der Technik bekannter Weise unterzogen. Diese Naßreinigung dient zum einen insbesondere zur SO₂-Auswaschung, ferner dazu, die dioxin- und/oder furanhaltigen Feststoffe auszusondern, die ansonsten den nachfolgenden Absorptionsprozeß belasten würden.

Vorzugsweise werden die im Wäscher aus dem Abgas des thermischen Prozessen abgetrennten dioxin- und/oder furanhaltigen Feststoffe (wie auch andere Feststoffe) aus der Waschflüssigkeit abgetrennt und in einer an halogenaffinen Metalloxiden, - hydroxiden und/oder Oxihydroxiden gesättigten Salzschmelze, die vorzugsweise im übrigen im wesentlichen aus Natrium-, Kalium- und/oder Calciumchlorid und im Prozeß gebildeten oder eingesetzten und aus dem Abgas ausgewaschenen Halogeniden oder anderen Feststoffen besteht, aufgeschmolzen, wobei die Dioxine und Furane vernichtet werden. Diese Vernichtung geschieht vorzugsweise dadurch, daß die gesättigte Salzschmelze einer Temperatur von 700 bis 1100°C, weiterhin vorzugsweise zwischen 800 und 900°C, unterworfen wird, um sicherzustellen, daß durch Halogenentzug und Reaktion mit den halogenaffinen Stoffen Dioxine und Furane umgewandelt bzw. vernichtet werden. Die von Dioxinen und Furanen befreiten Feststoffe können anschließend nach bekannten Aufbereitungsverfahren wieder in den Prozeß zurückgeführt, einer anderen Verwendung zugeführt oder deponiert werden. Die bei der Salzschmelze anfallenden Abgase werden zur Beseitigung darin enthaltener restlicher Schadstoffe ebenfalls einer Rauchgasreinigung unterzogen, vorzugsweise in den zuvor geschilderten Prozeß eingeschleust.

Die Verbrennung läuft vorzugsweise unter den Maßnahmen ab, die in der DE 36 15 027 A1 beschrieben wird. Vorzugsweise werden hierbei feinteilige Metalle aus der Gruppe der Elemente K, Ca, V, Cr, Mn, Fe, Ni, Cu, Zn, Na, Mg, Al, Sn, Ba, Ti, W, Mo und/oder deren Oxide, Hydroxide oder Oxihydroxide zugesetzt, wobei insbesondere auf Mangan, Eisen, Zinn, Magnesium und Aluminium in reiner Form oder als Mischung oder deren Oxide, Hydroxide oder Oxihydroxide zurückgegriffen wird. Aus Kostengründen empfiehlt es sich nach einer weiteren Ausgestaltung der Erfindung, daß Krätzen, vorzugsweise aus Aluminiumschmelzprozessen, und/Filterstäube aus der Aluminiumschrottaufbereitung als halogenaffine Stoffe eingegeben werden. Unter Krätzen versteht man die erstarrten Schlackenteile, die sich beim Schmelz- bzw. Raffinationsprozeß absetzen und die mechanisch "abgekratzt" werden. Insbesondere im Überschuß zugegebene Oxide von bekannten, Carbide bildenden Metallen, wie z.B. Eisen, Titan, Wolfram, Vanadin, Chrom, Molybdän sowie die Metalle selbst, tragen dabei neben einer Senkung der Halogenaktivität in prinzipiell bekannter Weise wegen ihres katalytischen Effektes der Begünstigung des Zerfalles von kohlenstoffhaltigen gasförmigen Verbindungen, analog der von z.B. CO, CH₄ usw., unter Abspaltung von Kohlenstoff zur weiteren Verminderung noch vorhandener, restlicher, halogenierter Kohlenwasserstoffe in den Prozeßgasen bei.

Der Verbrennungsprozeß wird so geführt, daß ein möglichst weitgehender Ausbrenngrad der im Prozeß eingesetzten Brennstoffe erzielt wird. Hierbei wird vorzugsweise der Verbrennungsprozeß mit einem Sauerstoffüberschuß von 6 bis 12 Vol.-% eingestellt, wobei die Restsauerstoffgehalte im Abgas gemessen werden können. Nach einer weiteren Ausgestaltung der Erfindung werden beim Verbrennungsprozeß die gasförmigen CO-Bestandteile auf weniger als 10 Vol.-% und die C-Anteile in der Flugasche auf weniger als 1 Vol.-% eingestellt.

Die erforderliche Umsetzung halogenierter Kohlenwasserstoffe im Verbrennungsprozeß wird durch den Zusatz der genannten feinteiligen, halogenaffinen Metalle und/oder deren Verbindungen unter Bildung von Metallhalogeniden begünstigt, und die Reaktionszeit verkürzt. Gleichzeitig wird bei verringerter Halogenaktivität in der Gasphase die Rekombination zu Dioxinen und Furanen vermindert.

Die restliche Umsetzung der Brennstoffe, die noch nicht im Verbrennungsraum erfolgt ist, kann nach einer weiteren Ausgestaltung der Erfindung in einem Nachbrennraum bei Temperaturen zwischen 700°C und 1200°C durchgeführt werden. Dies kann beispielsweise derart realisiert werden, daß die in den Nachverbrennungsraum eingezogene Luft so geregelt wird, daß die mit fallender Temperatur des Abgases eintretende Volumenkontraktion so ausgeglichen wird, daß die eingezogenen Luftmengen zwar zu einer günstigen Nachverbrennung im Nachbrennraum beitragen können, nicht aber zu einem Unterschreiten der unteren Grenztemperatur (700 bis 1200°C) durch überhöhte Luftmengen. Im Anschluß an die Verbrennung bzw. die Nachverbrennung wird das Rauchgas möglichst rasch unter 200°C abgekühlt, bevor es gereinigt wird. Hiermit erreicht man, daß der besonders kritische Temperaturbereich der Abgase um 300°C bis 600°C, in den bevorzugt eine Rekombination zu Dioxinen und Furanen erfolgt, nur kurzzeitig besteht. Die Abkühlung wird vorzugsweise durch feintropfenförmig eingesprühtes Wasser zusammen mit dort zugeführter Sekundärluft erreicht. Erfahrungen haben gezeigt, daß die Rekombination zu Dioxinen und Furanen mit steigender Abkühlgeschwindigkeit abnimmt. Bei bekannten Wasserzerstäubungsverfahren können Tröpfchendurchmesser bis hinab zu weniger als 20 µm erzielt werden.

Verzichtet man auf die vorbeschriebene Schnellabkühlung, was prinzipiell möglich ist, so werden die entstehenden höheren Dioxin- und Furananteile zum einen in einem Naßreinigungsverfahren bei Abtrennung der Feststoffanteile, an die Dioxine und Furane gebunden sind, beseitigt. Der dann entstehende höhere Dioxin- oder Furananfall wird, wie beschrieben, in der mit halogenaffinen Feststoffen gesättigten Salzschmelze vernichtet. Andererseits werden erhöhte, entsprechende Anteile in der aus dem Naßreinigungsverfahren austretenden Gasphase im Aerosolabscheider bei Einsprühen der Öl-Wasser-Emulsion abgefangen und ebenfalls in der beschriebenen Art und Weise vernichtet.

In einer alternativen Verfahrenführung ist es jedoch ebenso möglich, auf eine Nachverbrennung zu verzichten und die den Verbrennungsraum verlassenden Rauchgase über dem kritischen, die Bildung von Dioxinen und Furanen begünstigenden Temperaturbereich so lange zu halten, bis das Rauchgas in die Rauchgaswäsche eintritt. Vorzugsweise werden vor der Wäsche mehr als 700°C Abgastemperatur eingestellt.

In der Naß-Rauchgasreinigung werden die Rauchgase auf Temperaturen < 100°C, vorzugsweise auf weniger als 80 bis 50°C, abgekühlt, was durch Besprühen mit einer wässrigen Phase geschehen kann. Die Rauchgastemperatur nach Verlassen der Naßreinigung wird so eingestellt, daß die Taupunkte von den im zu reinigenden Rauchgas mitgeführten Halogensalzen, auf die aus Meßergebnissen von Anteilen entsprechender Halogenide im gereinigten Gas hinter der Naßreinigung geschlossen werden kann, unterschritten werden. Tiefere, im Wäscher eingestellte Temperaturen bewirken zugleich eine Verringerung der noch im vorgereinigten, aus dem Wäscher ausgetragenen Gas enthaltenen Dioxine und Furane und erhöhen in günstiger Weise den Anteil der Dioxine und Furane, die an Feststoffen haften, die im Wäscher aus der Gasphase abgetrennt werden und anschließend in einer an halogenaffinen Feststoffen gesättigten Salzschmelze von anhaftenden Dioxinen und Furanen befreit wird. Die dem Wäscher zur Gasreinigung zugeführte wässrige Phase wird in nach dem Stand der Technik bekannter Weise im Kreislauf geführt. Hierbei durchläuft sie zur Abtrennung der ausgewaschenen festen Bestandteile eine Trennvorrichtung, die im einfachsten Fall ein Absetzbecken sein kann. Der dort abgesetzte Schlamm kann durch Filterpressen, Zentrifugen, Trommel-Vakuum- oder Trommeldruckpressen vom Wasser befreit werden, das in den Waschflüssigkeitskreislauf zurückgeführt wird. Die von der festen Phase abgetrennte wässrige Phase kann je nach dem im Rauchgas ausgetragenen Anteil an Halogenen und Halogeniden sowie Stickstoffdioxid an Salzen gesättigt sein. Der zur Sättigung der Salzschmelze einzustellende halogenaffine Metalloxid-Anteil kann jedoch auch dadurch erreicht werden, daß entsprechende Mengen von Kalk zum Waschwasser der Rauchgaswäsche beigegeben werden.

Vorzugsweise weitere Ausgestaltungen des Besprühens der Rauchgase mit der Öl-Wasser-Emulsion bestehen darin, in der wässrigen Phase der Emulsion durch Zugabe wasserlöslicher basischer Stoffe einen pH-Wert von wenigstens 8 einzustellen, die Emulsion in Tröpfchenform aufzusprühen, wobei die Tröpfchen einen Durchmesser von 10 µm bis 500 µm, vorzugsweise 40 bis 100 µm, haben. Die auf das Rauchgas gesprühte Emulsion beträgt pro Kubikmeter durchgesetzten Rauchgases 0,07 l bis 1 l, vorzugsweise 0,3 bis 0,6 l. Erfahrungsgemäß kann die einzusprühende Menge mit abnehmender Tröpfchengröße verringert werden.

Die die Vorrichtung betreffende Aufgabe wird durch die Merkmalskombination gemäß Anspruch 24 gelöst, Weiterbildungen dieser Vorrichtung sind in den Ansprüchen 25 bis 28 beschrieben.

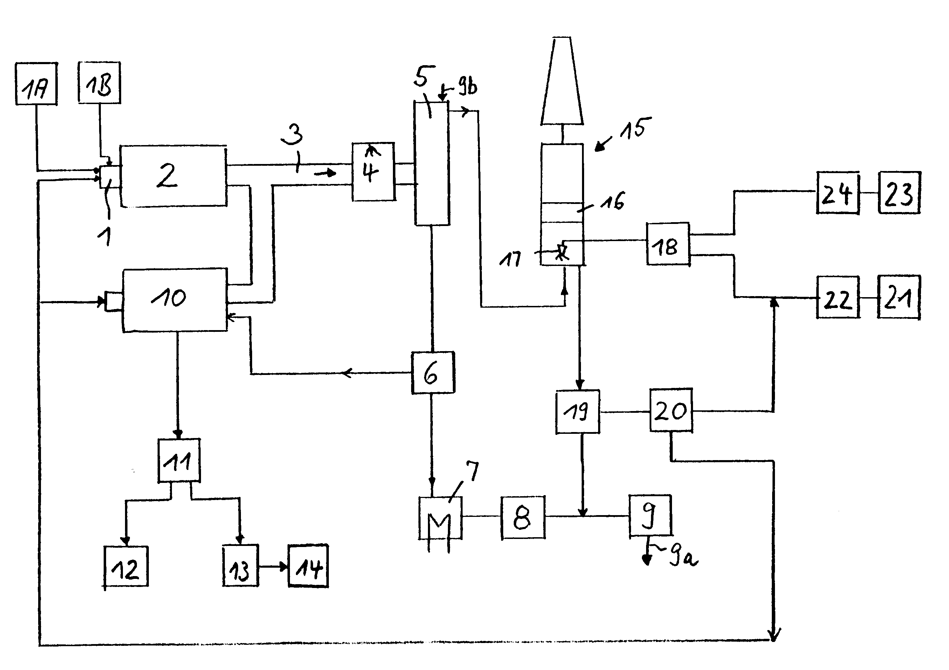

Das erfindungsgemäße Verfahren und die Vorrichtung sowie deren Handhabung und Vorteile werden im folgenden anhand eines konkreten Ausführungsbeispieles erläutert, wobei die einzige Figur eine Vorrichtung gemäß der Erfindung in schematischer Blockdarstellung zeigt.

Aus jeweiligen Vorratsbehältern 1A und 1B für Flüssigbrennstoffe sowie mittels Gastransport zugeführter fester Brennstoffe werden einem Brenner 1 Brennstoffe zugeführt, die in einem Verbrennungsraum 2 (Ofen) verbrannt werden. Das den Ofen 2 verlassende Abgas wird über einen Nachverbrennungsraum 3 geführt und gelangt schließlich in eine Kühlstrecke 4, in der das Abgas mit tröpfchenförmigem Wasser möglichst rasch abgekühlt wird, bevor es in einen Ringspalt-Venturi-Wäscher 5 gelangt, in dem eine Rauchgasreinigung durchgeführt wird. Die dem Wäscher zur Gasreinigung zugeführte Waschlösung wird in bekannter Weise im Kreislauf geführt und gelangt dabei aus dem Venturi-Wäscher kommend über eine Trennvorrichtung 6, in der feste Bestandteile abgeschieden werden. Diese Vorrichtung 6 kann z.B. ein bekanntes Absetzbecken sein, worin der sich absetzende Schlamm gesammelt und anschließend durch Filtrieren, Zentrifugieren oder Pressen von der wässrigen Phase befreit wird, die anschließend über eine Kühlfalle 7 hinsichtlich der Waschflüssigkeitstemperatur gegeben wird. Nach Durchlauf einer Zugabevorrichtung 8 für Kalk bzw. Kalkmilch wird die Waschlösung über eine Pumpe 9 wieder dem Venturi-Wäscher zugeführt. Dies ist durch Pfeile 9a, 9b angedeutet.

Die in der Trennvorrichtung 6 abgesonderten Feststoffe, der Filterkuchen, wird einem Ofen 10, insbesondere einem Drehtrommelofen zugeführt und ggf. nach Zugabe von NaCl und/oder KCl oder einem anderen bekannten, den Schmelzpunkt senkenden Halogenid bei Temperaturen zwischen 700 und 1100°C aufgeschmolzen. Die den Ofen 10 verlassenden Abgase werden der Nachverbrennung 3 zugeführt. Der unbrennbare Rückstand aus dem Ofen 10 wird über eine Kühlfalle 11 geführt, worin gleichzeitig die unbrauchbaren Schadstoffe separiert und einem Behälter 12 zugeführt werden, während die noch brauchbaren Bestandteile (Salze) in Vorrichtungen 13 und 14 ausgewaschen und kristallisiert werden, bevor sie in eine Zwischenlagerung 14 gelangen.

Das den Venturi-Wäscher 5 verlassende Rauchgas gelangt in einen Aerosolabscheider 15, der neben Naßfilter-Kunststoffpackungen 16 und unterhalb von diesen angeordnet Düsen 17 aufweist, die zum Einspritzen einer aus einem Mischbehälter 18 kommenden Emulsion dienen. Dieser Emulsionsmischer 18 wird zum einen aus dem über Teile 19 und 20, die weiter unten beschrieben werden, zurückgeführten Ölstrom beschickt, zum anderen aus einem Ölvorratsbehälter 21, dessen Abgabemengen über eine Dosierung 22 zugeführt werden. In dem jeweils einzustellenden Verhältnis gelangt ferner Wasser aus dem Wasserbehälter 23 über eine Dosierung 24 in den Emulsionsmischer 18.

Zur Durchführung des erfindungsgemäßen Verfahrens werden dem Brenner 1 des feuerfest zugestellten Ofens 2 Brennstoff und Sauerstoff zugeführt sowie feinteilige, halogenaffine Stoffe zur Senkung der Halogenaktivität im Verbrennungsraum, wie dies z.B. in der DE 36 15 027 A1 beschrieben wird. Insbesondere im Überschuß zugegebene Oxide von bekannten, Carbide bildenden Metallen, wie Eisen, Titan, Wolfram, Vanadin, Chrom und Molybdän sowie die Metalle selbst tragen dabei neben einer Senkung der Halogenaktivität wegen ihres bekannten und beschriebenen katalytischen Effektes der Begünstigung des Zerfalles von kohlenstoffhaltigen gasförmigen Verbindungen, wie Kohlenmonoxid, Methan und anderen kohlenstoffhaltigen Verbindungen, unter Abspaltung von Kohlenstoff analog zur weiteren Verminderung noch vorhandener, restlicher, halogenierter Kohlenwasserstoffe in den Prozeßgasen bei. Der Verbrennungsprozeß wird so geführt, daß ein möglichst weitgehender Ausbrenngrad der im Prozeß eingesetzten Brennstoffe erfolgt. Hierbei läuft die Verbrennung so ab, daß der Restsauerstoffgehalt in dem aus dem Ofen 2 austretenden Abgas etwa 6 bis 12 Vol.-% beträgt, ferner soll der CO-Anteil kleiner als 10 Vol.-% sein und die restlichen C-Anteile in der Flugasche unter 1 % liegen. Die erforderliche Umsetzung halogenierter Kohlenwasserstoffe im Verbrennungsprozeß wird durch den Zusatz der genannten feinteiligen halogenaffinen Metalle und deren Verbindungen über den Zuteiler 1B unter Bildung von Metallhalogeniden begünstigt und die Reaktionszeit verkürzt. Gleichzeitig wird bei verringerter Halogenaktivität in der Gasphase die Rekombination zu Dioxinen und Furanen vermindert. Die restliche Umsetzung der Brennstoffe, die noch nicht im Ofen 2 erfolgt ist, wird im Nachbrennraum 3 durchgeführt, in dem Temperaturen im Bereich von wenigsten 700°C bis 1200°C eingehalten werden. Dies kann derart herbeigeführt werden, daß die in den Verbrennungsraum 3 eingezogene Luft so durch Einblasen von Sekundärluft in die Abkühlzone 4 geregelt wird, daß die mit fallender Temperatur des Abgases eintretende Volumenkontraktion so ausgeglichen wird, daß die in den Nachverbrennungsraum 3 eingezogenen Luftmengen zwar zu einer günstigen Nachverbrennung im Nachbrennraum 3 beitragen können, nicht aber zu einem Unterschreiten der vorgenannten Temperaturen. Durch diese Maßnahme wird bewirkt, daß der besonders kritische Temperaturbereich der Abgase um 300 bis 600°C, insbesondere 300 bis 400°C vermieden wird, in dem bevorzugt eine Rekombination zu Dioxinen und Furanen zu befürchten ist. Die in der Abkühlzone 4 vorliegende Abgastemperatur wird auf Werte von weniger als 200°C geregelt, was durch feintropfenförmig zugegebenes Wasser und die bereits erwähnte Sekundärluft geschehen kann. Der Wassertröpfchendurchmesser liegt etwa zwischen 10 µm bis 200 µm, wobei eine kleinere Tröpfchengröße zu einer rascheren Abkühlung führt. Entsprechendes gilt selbstverständlich bei größeren aufgegebenen Wassermengen.

In einer Abwandlung der Vorrichtung bzw. des erfindungsgemäßen Verfahrens kann die Schnellabkühlung (Kühlstrecke 4) entfallen.

In dem Venturi-Wäscher werden die Rauchgase auf Temperaturen unterhalb von 100°C, vorzugsweise auf Temperaturen zwischen 50°C und 80°C, abgekühlt, was durch Einstellen der Tröpfchengröße und Wassermenge der dem Wäscher zugeführten Waschlösung sowie deren Temperatur möglich ist. Je tiefer die im Wäscher eingestellten Temperaturen sind, desto mehr werden die Dioxine und Furane ausgewaschen, soweit sie an Feststoffpartikeln haften. Die ausgewaschenen, an Feststoffen haftenden Dioxin- und Furananteile gelangen in die Salzschmelze, aus der sie anschließend befreit werden. Die dem Wäscher 5 zur Gasreinigung zugeführte wässrige Phase wird im Kreislauf geführt. Dabei gelangt die Waschlösung zusammen mit dem abgetrennten ausgewaschenen Rauchgasanteilen in eine Trennvorrichtung 6, wo die Feststoffe mit anhaftenden Schadstoffanteilen in Form eines Filterkuchens von der wässrigen Phase befreit werden, die anschließend wieder in den Waschkreislauf zurückgeführt wird. Die von der festen Phase abgetrennte wässrige Phase kann je nach dem im Abgas ausgetragenen Anteil an Halogenen und Halogeniden sowie Schwefeldioxid an Salzen gesättigt sein. In einer Kühlfalle 7 erfolgt eine Abkühlung der im Kreislauf umgeführten wässrigen Phase durch Wärmeentzug, wobei gleichzeitig eine Temperatureinstellung der Waschflüssigkeit möglich ist. Durch Zugabe von Kalk oder Kalkmilch wird die wässrige Phase neutralisiert (Bezugszeichen 8) und über eine Pumpe 9 bzw. Leitungen 9a, 9b dem Wäscher 5 erneut zugeführt.

Die aus der wässrigen Phase in der Trennvorrichtung abgetrennten Feststoffe, der Filterkuchen, enthalten vorwiegend verschiedene Oxide, Halogenide und schwefelsaure Verbindungen der im Prozeß eingesetzten Metalle und/oder Metalloxide, darunter auch Reaktionsprodukte, wie dem beispielsweise zugesetzten Kalk. Der Filterkuchen ist mit Dioxinen und/oder Furanen kontameniert und wird in einem Drehtrommelofen 10 bei Temperaturen zwischen 700°C und 1100°C aufgeschmolzen. Ggf. wird dem Filterkuchen, falls erforderlich und nicht bereits durch den gegebenen Halogenidanteil realisiert, Natrium- und/oder Kaliumchlorid oder ein anderes bekanntes, den Schmelzpunkt senkendes Halogenid zugesetzt, um den Schmelzpunkt der Filterkuchenmischung zwischen 700°C und 1100°C, vorzugsweise zwischen 700°C und 850°C, einzustellen, wobei jeweils der Zusatz genannter Salze die Konzentration nicht überschreiten soll, die sicherstellt, daß der Filterkuchen beim Aufschmelzen im angegebenen Temperaturbereich eine Salzschmelze bilden kann, die gesättigt ist. Bei Verwendung eines Drehtrommelofens 10 sind die erforderlichen Durchmischungsbedingungen beim Aufschmelzen des Einsatzes besonders günstig. Beim Aufschmelzen lösen sich vorhandene Metalloxide bis zur Sättigung, im Überschuß vorhandene feinteilige Metalloxide bleiben als feste Phase in der Salzschmelze suspendiert.

In der oxidgesättigten Salzschmelze entspricht die Halogenaktivität der Schmelze der mit ihr im Gleichgewicht stehenden Oxidphase und ist im genannten Temperaturbereich der Schmelze deutlich geringer als die Halogenaktivität der im zu schmelzenden Einsatz vorhandenen Dioxine und Furane, so daß es bei deren Umsetzung zu einem Entzug der Halogene aus diesen organischen Verbindungen und damit zu ihrer Zerstörung kommt. Enthalogenisierte Restgase der Umsetzung entweichen aus der oxidgesättigten Salzschmelze und werden in der Heizflamme des Ofens verbrannt. In der oxidgesättigten Salzschmelze liegen nach dem Abkühlen die Dioxine und Furane unterhalb der Nachweisgrenze.

Die Beheizung des für die Salzschmelze verwendeten Drehtrommelofens 10 erfolgt in der bereits in der DE 36 15 027 A1 beschriebenen Weise. Restliche Dioxine und Furane bzw. durch Rekombination im kritischen Temperaturbereich zwischen 300 und 600°C neugebildete Verbindungen verbleiben weitgehend an den im Wäscher niedergeschlagenen Stäuben, die dann wiederum in einer oxidgesättigten Salzschmelze im Ofen 10 vernichtet werden. Mit anderen Worten, das Abgas des Ofens 10 gelangt in dieselben Nachverbrennungsstrecke 3 bzw. Kühlstrecke 4 wie das Abgas des Ofens 2. Die den Ofen 10 verlassende flüssige Salzschmelze wird im Anlagenteil 11 abgekühlt. Der dort erhaltene Rückstand kann deponiert oder einer Wiederverwertung zugeführt werden.

Das im genannten Wäscher 5 vorgereinigte Gas ist mit Wasserdampf übersättigt und enthält noch restliche Feinstaubanteile sowie restliche Dioxine und/oder Furane. Das den Wäscher verlassende Rauchgas wird in den Aerosolabscheider 15 geführt und dort nachbehandelt. Der Aerosolabscheider 15 besteht im einfachsten Falle aus einem Rohr, in dem wenigstens zwei oder mehrere in Reihe geschaltete Naßfilter bzw. Naßfilterpackungen 16 aus Kunststoff enthalten sind. Diese Kunststoffpackungen 16 besitzen eine große Oberfläche und gasdurchlässige Poren. Zwischen den einzelnen Packungen 16 befindet sich jeweils ein leerer Raum. Das Gas wird entgegen der Schwerkraft von unten in den Aerosolabscheider eingebracht. In dem Raum unter jeder Packung 16 außer der in Strömungsrichtung letzten Packung befinden sich jeweils eine oder mehrere Düsen 17, durch die jeweils eine Öl-Wasser-Emulsion eingedüst werden kann. Die durch die Düsen 17 feinteilig eingebrachten Tropfen bewirken eine weitgehende Kondensation der im durchgesetzten Gas enthaltenen Aerosole an der über die Düsen eingebrachten Flüssigphase (Emulsion) und der mit einem entsprechenden Feuchtfilm belegten Oberfläche der jeweils nachgeschalteten Packung 16. Wichtig für die erfindungsgemäße Funktion des Aerosolabscheiders 15 ist es, daß die Zahl der in den Raum unter dem Naßfilter eingedüsten Wassertröpfchen so groß ist und ihr Durchmesser so eingestellt wird, daß die Tropfen wenigstens zeitweise in der Schwebe gehalten werden, so daß der Raum unter der jeweiligen Packung 16 wirbelschichtartig durch schwebende Tropfen gleichmäßig ausgefüllt wird. Durch Aufnahme der abzureinigenden Aerosole und Koagulation einzelner Tropfen bilden sich größere Tropfen, die der Schwerkraft folgend nach unten absinken und mit den aufgenommenen Aerosolen ausgetragen werden. Auch der die Naßfilteroberfläche bedeckende Feuchtigkeitsfilm nimmt Aerosole und Feuchtphasen aus kleineren, im Gasstrom mitgetragenen Tröpfchen auf, verstärkt sich und tropft gleichfalls der Schwerkraft folgend nach unten ab, wobei weitere Aerosole aus dem im Gegenstrom geführten Gas aufgenommen werden. Die Tröpfchengröße der Emulsion liegt zwischen 10 µm bis 500 µm, vorzugsweise zwischen 40 µm bis 70 µm. Die eingesprühte Emulsionsmenge liegt pro Kubikmeter des zu reinigenden Gases bei 0,1 bis 1 l, insbesondere bei 0,3 bis 0,6 l, kann jedoch mit abnehmender Tröpfchengröße entsprechend verringert werden.

Wesentlich für die erfindungsgemäße Funktion des Aerosolabscheiders 15 ist zusätzlich, daß die Benetzbarkeit zwischen der Feuchtphase der eingesprühten Emulsionströpfchen sowie der Feuchtphase des Filmes auf der Oberfläche des Naßfilters 16 einerseits und der abzuscheidenden flüssigen und festen Aerosole im nachzureinigenden Gasstrom andererseits ausreichend ist, so daß bei Berührung zwischen der Feuchtphase und den Aerosolen eine Aufnahme der Aerosole durch die Feuchtphase erfolgen kann. Eine gute Benetzung setzt allgemein z.B. eine gegenseitige Löslichkeit der zu benetzenden Phasen voraus bzw. einen in beiden Phasen löslichen Zusatzstoff, wobei bereits eine minimale Löslichkeit des in einer Phase gelösten Stoffes im anderen Stoff genügt, um die Oberflächenspannung der flüssigen Phase gegen den anderen Stoff zu senken, so daß es zu einer günstigen Benetzbarkeit kommt. Wenn z.B. als Feuchtphase reines Öl im Aerosolabscheider versprüht würde, bewirkt dies zwar eine gute Abscheidung der Dioxine und Furane durch jeweilige Lösung im Öl, aber die Bedingungen für eine Kondensation der flüssigen, wässrigen Aerosole und der mit der wässrigen Phase kontaminierten festen Aerosole an der Ölphase kann je nach den beteiligten Stoffen ungünstiger sein. Die Verwendung von reinem Öl als flüssiger Phase im Aerosolabscheider hinter einem thermischen Prozeß kann weiterhin bei Ausfall der Wasserzufuhr in der vorgeschalteten Naßreinigung dazu führen, daß als Folge eines Durchbruches heißer Gase eine Zündung und gefährliche Verpuffung der feinteilig eingesprühten Ölphase erfolgen kann. Aus diesem Grund wird eine Emulsion aus Wasser und Öl aufgegeben, die in einem Mischer bzw. einer Dispergiermaschine 18 zusammengestellt wird. Ggf. kann der Öl-Wasser-Emulsion ein Emulgator zugegeben werden. Vorzugsweise wird in der wässrigen Phase der Emulsion ein pH-Wert von > 8 durch Zusätze von Laugen, wie NaOH oder Kalkmilch eingestellt.

Es hat sich als günstig erwiesen, wenn die Herstellung der genannten Emulsion unter Einsatz einer Dispergiervorrichtung 18 für den durchlaufenden Einsatz unmittelbar vor der Einleitung in die Zerstäubungsdüsen 17 erfolgt. Ein Entmischen der Emulsion wird somit weitgehend ausgeschlossen, so daß die Zugabe des Emulgators entsprechend verringert oder eingespart werden kann. Es ist jedoch ebenso möglich, die Dispersion des Öles in der wässrigen Phase direkt in den Zerstäubungsdüsen 17 herzustellen, indem die wässrige Phase und die Ölphase anteilig den Düsen 17 zugeführt wird und durch das Zerstäubungsgas emulgiert wird. Die den Aerosolabscheider 15 verlassene bzw. dort abfließende Emulsion hat die restlichen Schadstoffe absorbiert, wobei die dispergierte Ölphase vorwiegend die im Rauchgas enthaltenen Dioxine und Furane enthält. Diese Emulsion wird einer Trennvorrichtung 19, beispielsweise einer Zentrifuge zugeführt, in der die ölreiche Phase abgetrennt wird und anschließend über eine Dosiervorrichtung 20 zum Teil dem Brenner 1 des Ofens 2 bzw. dem Brenner des Drehtrommelofens 10 zugeführt wird, wo sie unter feinteiliger Versprühung in die Heizflamme des thermischen Prozesses der jeweiligen Öfen gegeben wird, wo sie verbrennt. Die in der Zentrifuge 19 anfallenden wässrigen Anteile werden dem Waschwasserkreislauf des Wäschers 15 bzw. der Pumpe 9 zugeführt.

Feinstaub und restliches Öl mit Anteilen von im Öl gelösten Dioxinen und/oder Furanen gehen beim Kreislauf des Waschwassers im Wäscher 5 in den im Wäscher aus dem Rauchgas abgetrennten Feststoff über. Die in den Wäscher 5 eingebrachten Ölanteile begünstigen dort bereits die Abtrennung von Dioxinen und/oder Furanen aus dem Rauchgas durch Absorption. Diese Ölphase geht vom Wäscher 5 kommend weitgehend in den Filterkuchen über, der anschließend im Drehtrommelofen 10 verbrannt wird.

Bei einem Anteil von 290 mg Kohlenwasserstoffen pro Kilogramm Feststoff können bereits im Wäscher 99,5 % der im Abgas mitgeführten Dioxine und Furane aus dem Rauchgas entfernt werden. Entsprechend werden dem Wäscher 1 mg bis 40 mg Kohlenwasserstoffe pro Kilogramm hier abgeschiedener Feststoffe zugesetzt.

Die in den Aerosolabscheider neu einzusetzende Emulsion wird durch Zusatz von frischem Öl aus dem Behälter 21 über die Dosiervorrichtung 22 sowie Wasser aus dem Behälter 23 über die Dosiervorrichtung 24 auf die beschriebene Zusammensetzung und Menge gebracht, die zur Rauchgasreinigung erforderlich ist.

Die erfindungsgemäße Wirkung kann alternativ auch erreicht werden, wenn aus der aus dem Aerosolabscheider 15 austretenden Emulsion nach der Abtrennung eines Anteiles des ursprünglich eingesetzten Öles aus der verbleibenden restlichen Phase eine weitere, vorwiegend wässrige Phase und Feststoffe enthaltene Phase nach im Prinzip bekannten Trennverfahren abgetrennt wird und diese abgetrennte Phase dem Wäscher 5 zugeführt wird. In diesem Falle wird die dem Wäscher 5 zugeführte Phase, bestehend aus Öl- und Wasseranteilen, durch Zusatz von frischem Öl und Wasser auf die beschriebene Zusammensetzung und Menge der in den Aerosolabscheider 15 einzusetzenden Emulsion gebracht und im Kreislauf erneut in den Aerosolabscheider 15 geführt. Der wesentliche Gedanke der Erfindung besteht darin, daß alle dioxin- und furanhaltigen flüssigen und festen Abfallstoffe in den Prozeß zurückgeführt werden, wobei deren Dioxin- und Furananteile durch Halogenentzug durch zugesetzte feinteilige Metalle und/oder deren Oxide unter Umwandlung in Halogenide vernichtet werden.

In einem konkreten ersten Ausführungsbeispiel ist Aluminiumschrott eingeschmolzen worden, wobei in einem mit Schamott zugestellten Drehtrommelofen 2 etwa 15 to Kunststoffe enthaltender Aluminiumschrott 9 Stunden im laufenden Ofenbetrieb unter einer Salzschmelze von etwa 5 to eingeschmolzen wurde. Die Salzschmelze bestand im wesentlichen aus Natriumchlorid, Kaliumchlorid und Magnesiumchlorid. Der Drehtrommelofen 2 hatte eine Länge von 6 m, einen lichten Innendurchmesser von 2,85 m und einen Außendurchmesser von 3,5 m. Die zum Einschmelzen erforderliche Energie wurde durch Verbrennen von etwa 100 kg Öl/h und 140 kg Filterstaub/h eingebracht. Bei der Verbrennung des Filterstaubes wurden 100 kg Filterstaub, 50,52 kg Kohlenstoff und 8,48 kg Wasserstoff sowie 11 kg metallisches Aluminium mit Luftsauerstoff umgesetzt. Hierbei entstanden 49,79 kg Asche. Der Heizwert des Filterstaubes lag bei 7000 kcal/kg. Die bei der Verbrennung anfallende Asche bestand vorwiegend aus Oxiden des Aluminiums, Kupfers, Eisens, Nickels, Chroms, Bleis und Zinks und war nach der Verbrennung im Rauchgas enthalten. Dem eingesetzten Öl waren 10 % einer ölhaltigen Emulsion in einem Verhältnis von Öl/Wasser von etwa 0,43 zugesetzt worden, wobei die Emulsion aus der im Kreislauf umgeführten Waschflüssigkeit abgetrennt worden war, die dem Kreislauf des Aerosolabscheiders 15 bzw. der Vorrichtung 20 entnommen worden ist. Der Anteil an Dioxinen und Furanen in der Ölphase der Emulsion betrug etwa 50 ng/g Öl. Der Einsatz des Filterstaubes erfolgte über eine im Prinzip bekannte Turbo-Feuerung mit pneumatischer Zuführung des Filterstaubes. Das Öl mit der zugesetzten genannten Emulsion wurde über einen parallel dazu eingesetzten Ölbrenner 1 mit Ölzerstäubung verbrannt. Bei der dazu erforderlichen Zufuhr von Verbrennungsluft wurde der Sauerstoffüberschuß von etwa 7 Vol.-% hinter dem Drehtrommelofen eingestellt. Die Zufuhr von Verbrennungsluft und Öl wurde dabei so geregelt, daß die Temperatur des Abgases hinter dem Ofen, das in einer Menge von etwa 3400 Normkubikmeter/h anfiel, auf etwa 1100°C eingeregelt wurde. Die Temperatur wurde dazu über ein optisches Meßgerät erfaßt und die Meßergebnisse für die Einstellung des Temperaturwertes verwendet. Die zugeführte Verbrennungsluft schwankte pro Stunde im Mittel um etwa 2900 Normkubikmeter. Die anschließende Abgasleitung hatte eine Länge von 40 m bei einem inneren lichten Durchmesser von 0,6 m und einem äußeren Durchmesser von 1 m. Die Abgasleitung war wärmeisolierend mit Schamotte zugestellt. Die Abgastemperatur vor Eintritt des Gases in den Wäscher 5 lag bei 750°C. Durch Eindüsen von Luft und Wasser in die Kühlstrecke 4 wurde die Temperatur des Abgases auf 200°C und weniger gesenkt. Die dabei zur Kühlung zugesetzte Luftmenge wurde so geregelt, daß die in der Abgasleitung bei Abkühlung eintretende Volumenkontraktion so kompensiert wurde, daß der bei der Abkühlung in der Abgasleitung entstehende Unterdruck nicht dazu führte, daß zwischen dem Drehtrommelofen 10 und der Mündung der Abgasleitung (Nachbrennraum 3) zusätzliche Luftmengen angesaugt werden konnten, die zu einer unzulässigen Abkühlung der Abgase in dem Nachbrennraum 3 geführt hätten, so daß die angestrebte Temperatur von etwa 750°C vor der Kühlstrecke nicht unterschritten worden ist. Die Temperatur in dem Nachverbrennungsraum 3 wurde optisch gemessen und zur Regelung der der Kühlstrecke 4 über einen Ventilator zuzuführenden Kühlluftmenge verwendet. Die zwischen dem Drehtrommelofen 10 und der Nachverbrennungsstrecke 3 angesaugte Luftmenge wurde so auf etwa 300 Normkubikmeter/h bis 1200 Normkubikmeter/h begrenzt. Hierzu wurden in der Kühlstrecke 4 im Mittel etwa 7500 Normkubikmeter Luft/h eingeblasen.

Die hinter der Kühlstrecke 4 angestrebte Abgastemperatur von weniger als 200°C wurde durch etwa 200 kg Wasser/h, das feinteilig in die Kühlluft eingedüst wurde, geregelt. Anschließend wurde das so vorgekühlte Abgas im nachfolgenden Ringspalt-Venturi-Wäscher 5 während des Abtrennens des im Abgas mitgeführten Staubes auf Temperaturen von weniger als 100°C abgekühlt. Die insgesamt in dem Abgas nach Austritt aus dem Drehtrommelofen zugesetzten Luftmengen einschließlich der hinter dem Drehtrommelofen 2 angesaugten Luftmengen lag bei etwa 7400 Normkubikmeter/h, so daß der Endgehalt des Sauerstoffes im gereinigten Abgas bei 17 Vol.-% Sauerstoff lag.

Die Chloraktivität des Abgases in der Nachverbrennungsstrecke 3, die sich im Gleichgewicht mit Verbrennungsprodukten chlorhaltiger Kohlenwasserstoffe und aus der Salzschmelze verdampfenden oder im Abgasstrom mitgerissenen Chloriden einstellt, wurde durch die Aktivität der genannten Metalloxide, die als Folge des Zusatzes des Filterstaubes mit der beschriebenen Zusammensetzung im Abgas enthalten waren, durch Umsetzungen zu Metallchloriden im Verhältnis zu dem Anteil der im Abgas enthaltenen Metalloxide gemindert. Dadurch und durch die im Nachverbrennungsraum eingestellten Bedingungen wurde der Anfall von Dioxinen und Furanen trotz des Einsatzes chlorhaltiger Stoffe im Prozeß gemindert. Etwa 99,5 % der im Abgas anfallenden Dioxine und Furane wurden im Ringspalt-Venturi-Wäscher 5 aus dem Abgas entfernt und waren in dem aus der Waschflüssigkeit abgetrennten Filterkuchen enthalten. Dabei wurde in dem im Kreislauf geführten Waschwasser durch Zusatz von Kalk ein pH-Wert von ca. 8 eingestellt.

Der aus dem Waschwasser abgetrennte Filterkuchen fiel in einer Menge von etwa 210 kg/h an und enthielt vorwiegend Chloride des Natriums, Kaliums und Calciums sowie Sulfate und neben freiem Kalk auch Oxide des Aluminiums, Eisens, Zinks, Kupfers, Nickels und Bleis. Der Filterkuchen wurde gesammelt, getrocknet und in dem Drehtrommelofen 10 als Einsatz von etwa 7,5 to in etwa 4 h bis zum Schmelzen bei etwa 900°C aufgeheizt. Dabei erfolgte die Energiezufuhr sowie die Abgasführung und Behandlung in der gleichen Weise wie beim Einschmelzen von Aluminiumschrott in einer Salzschmelze im Drehtrommelofen, die zuvor beschrieben worden ist. Unmittelbar nach dem Schmelzen wurde der geschmolzene Filterkuchen aus dem Ofen ausgeleert und an Luft abgekühlt. Nach der beschriebenen Behandlung waren keine Dioxine und Furane in der abgekühlten Schmelze mehr feststellbar. Dieses Ergebnis konnte erzielt werden, weil der Filterkuchen einen Salzgehalt hatte, der die Bildung schmelzflüssiger Phasen bei der eingestellten Temperatur von 900°C bis zur Sättigung der Schmelzphase mit einem ausreichend hohen Oxidanteil von chloraffinen Metallen, die über die genannten Metalloxide beim Einsatz des genannten Filterstaubes als Brennstoff und des Kalkzusatzes zum Waschwasser des Wäschers 5 eingebracht wurden, sicherstellte. Das im Wäscher vorgereinigte Abgas mit dem geringen restlichen Anteil von Dioxinen und Furanen wurde durch den Aerosolabscheider 15 mit den Kunststoffpackungen 16 geführt. Hierbei wurde eine im Kreislauf geführte Emulsion aus Öl und Wasser über die Düsen 17 feinteilig mit Partikelgrößen von 40 bis 70 µm in einer Menge von 0,5 l/qm³ Abgas in den Aerosolabscheider 15 eingesprüht. In der im Kreislauf geführten Emulsion wurde durch Zusätze einer Lösung aus Öl mit einem Anteil von 30 % handelsüblichem Emulgator die Konzentration der zugesetzten Öl-Emulgator-Lösung in der Emulsion bei 10 bis 30 % gehalten. Der Zusatz des Emulgators diente zur Stabilisierung der Emulsion und zur Verhinderung von Verstopfungen der Packungen 16 im Aerosolabscheider 15 durch dort eingebrachtes Öl. Pro Stunde wurde im Mittel aus der im Kreislauf geführten Emulsion eine Menge an Emulsion abgetrennt, die etwa 1,4 bis 2,1 kg Öl/h und 0,6 bis 0,9 kg Emulgator enthielt. Diese Menge wurde dem zur Verbrennung im Drehtrommelofen 2 bzw. 10 eingesetzten Öl zugesetzt und zusammen mit dem Brennstoff der Flamme der Prozeßbeheizung zugeführt und umgesetzt.

Damit wurde aus dem Kreislaufmaterial der Emulsion eine Dioxin- und Furanmenge sowie andere Schadstoffmengen entfernt, die denjenigen entsprachen, die in dem genannten Zeitbereich im Aerosolabscheider von der eingesprühten Emulsion aufgenommen worden waren.

In einem weiteren Ausführungsbeispiel wurde in entsprechender im vorbeschriebenen Ausführungsbeispiel beschriebener Weise Aluminiumschrott in einer Salzschmelze eingeschmolzen. Die zum Einschmelzen erforderliche Energie wurde durch Verbrennen von Öl aufgebracht, dem der im vorgenannten Ausführungsbeispiel genannte Filterstaub zugemischt wurde. Für den Verbrennungsprozeß wurden pro Stunde in einer Menge von 197 kg Öl etwa 30 kg Filterstaub zugesetzt sowie 10 kg der im vorgenannten Beispiel genannten Emulsion mit einem Wasseranteil von 7 kg, wobei die nach homogener Durchmischung mittels einer Exzenterpumpe erhaltene Suspension einem Zerstäubungsbrenner zugeführt wurde. Für die Zerstäubung der Suspension wurden etwa 43 Normkubikmeter Preßluft/h mit einem Vordruck von 6 bar der Brennerdüse 1 zugeführt. Insgesamt wurden dem Verbrennungsprozeß 3350 Normkubikmeter Luft/h zugesetzt, um in dem den Drehtrommelofen 2 verlassenden Abgas einen Sauerstoffüberschuß von etwa 7 Vol.-% einzustellen. Die Abgasmenge, die den Drehtrommelofen 2 verließ, lag bei 3450 Normkubikmeter/h. Im übrigen war die weitere Behandlung des Abgases bzw. des im Wäscher 5 anfallenden Filterstaubes sowie die Nachbehandlung der Abgase im Aerosolabscheider 15 einschließlich der anfallenden Stoffanteile identisch zum vorbeschriebenen Ausführungsbeispiel. Unterschiedlich war nur ein geringfügig höherer Anfall an Dioxinen und Furanen in dem im Wäscher anfallenden Filterkuchen, allerdings konnten die genannten Schadstoffe in gleicher Weise beim Aufschmelzen des Filterkuchens vernichtet werden, da der geringe Anteil an Metalloxiden aus der geringeren, dem Verbrennungsprozeß zugesetzten Menge an Filterstaub durch einen ausreichend höheren Anteil an Kalkzusatz zum Waschwasser des Wäschers 5 ausgeglichen werden konnte, so daß die Salzschmelze des Filterkuchens wiederum an chloraffinen Metalloxiden hinreichend gesättigt war. Die Umsatzbedingungen im Aerosolabscheider 15 entsprachen denen, die im vorgenannten Beispiel beschrieben worden sind.

## Patentansprüche

1. Verfahren zur Reduzierung der Schadstoffanteile im Rauchgas thermischer, unter Anwesenheit einer oxidierenden Gasphase kohlenstoff- und wasserstoffhaltige sowie halogenhaltige Brennstoffe verfeuernder Prozesse, insbesondere beim Aluminiumumschmelzverfahren, vorzugsweise zur Minimierung von gasförmigen, flüssigen und festen Dioxinen, Furanen, Halogenen oder halogenhaltigen Stoffen, wobei im Verbrennungsprozeß halogenaffine Metalle und/oder deren Oxide, Hydroxide und/oder Oxihydroxide feinteilig in die Heizflamme eingebracht werden und die den Verbrennungsraum verlassenden Rauchgase unter Wärmeentzug gereinigt werden,
**dadurch gekennzeichnet,**
daß die Menge der halogenaffinen Metalle und/oder deren Oxide, Hydroxide und/oder Oxihydroxide auf eine Menge begrenzt wird, die nur um 1 bis 10 % über der Menge liegt, die stöchiometrisch zur Umsetzung und mineralischen Abbindung von Halogenen und/oder Halogenwasserstoffen in Gegenwart anderer Reaktionspartner wie SO₂ im Abgas erforderlich ist und daß die Rauchgase zur Absorption der noch enthaltenen Schadstoffe, insbesondere der Dioxine und Furane, mit einer nicht zündfähigen Öl-Wasser-Emulsion besprüht werden.

2. Verfahren nach Anspruch 1, dadurch gekennzeichnet, daß die Öl-Wasser-Emulsion ein Öl-Wasser-Volumenverhältnis von 0,01 bis 90 aufweist, wobei vorzugsweise der Öl-Wasser-Emulsion ein Emulgator zugesetzt wird.

3. Verfahren nach einem der Ansprüche 1 oder 2, dadurch gekennzeichnet, daß die nach Absorption der Schadstoffe, insbesondere der Furan- und/oder Dioxinbestandteile, vorliegende Emulsion in eine die Furan- und/oder Dioxinbestandteile enthaltene Ölphase und eine wässrige Phase getrennt werden, vorzugsweise in einer Zentrifuge, wobei weiterhin vorzugsweise die abgetrennte, schadstoffbelastete Ölphase nach Abtrennung der dort enthaltenen Feststoffe ganz oder teilweise als Brennstoff in eine Verbrennungskammer geführt und dort verbrannt und/oder die wässrige Phase und/oder die schadstoffreien Anteile der Emulsion erneut zur Bildung einer Öl-Wasser-Emulsion in den Prozeß zurückgeführt wird.

4. Verfahren nach einem der Ansprüche 1 bis 3, dadurch gekennzeichnet, daß die Abgase in einem Aerosolabscheider mit der Öl-Wasser-Emulsion besprüht werden, bevor sie einen Naßfilter oder Naßfilterpackungen durchlaufen, vorzugsweise die Abgase, bevor sie in den Aerosolabscheider geleitet werden, einer Naßreinigung, vorzugsweise in einem Venturi-Wäscher, unterzogen werden, wobei mehr als 99 % der im Rauchgas anfallenden Dioxine und/oder Furane ausgewaschen werden.

5. Verfahren nach Anspruch 4, dadurch gekennzeichnet, daß die im Wäscher aus dem Abgas des thermischen Prozesses abgetrennten dioxin- und/oder furanhaltigen Feststoffe aus der Waschflüssigkeit abgetrennt und in einer mit halogenaffinen Metalloxide, -hydroxide und/oder Oxihydroxide enthaltenen gesättigen Salzschmelze, die vorzugsweise im übrigen im wesentlichen aus Natriumchlorid, Kaliumchlorid, Calciumchlorid und im Prozeß gebildeten oder eingesetzten und aus dem Abgas ausgewaschenen Halogeniden oder anderen Feststoffen besteht, aufgeschmolzen werden, wobei die Dioxine und Furane vernichtet werden, wobei vorzugsweise die Salzschmelze einer Temperatur von 700 bis 1100°C, vorzugsweise 800 bis 900°C, unterworfen wird, um die im Feststoff enthaltenen Dioxine und/oder Furane durch Halogenentzug und Reaktion mit den halogenaffinen Stoffen umzuwandeln bzw. zu vernichten und/oder die bei Verbrennung der Salzschmelze anfallenden Abgase einer Rauchgasreinigung, vorzugsweise in einer Naßwäsche und/oder durch Besprühen mit einer Öl-Wasser-Emulsion, unterzogen werden.

6. Verfahren nach einem der Ansprüche 1 bis 5, dadurch gekennzeichnet, daß die bei der Verbrennung zugesetzten feinteiligen Metalle aus der Gruppe der Elemente K, Ca, V, Cr, Mn, Fe, Ni, Cu, Zn, Na, Mg, Al, Sn, Ba, Ti, W, Mo und/oder deren Oxiden, Hydroxiden oder Oxihydroxiden gewählt werden, vorzugsweise aber Mn, Fe, Zn, Mg, Al in reiner Form oder als Mischung, insbesondere Krätzen, vorzugsweise aus Aluminiumumschmelzprozessen und/oder Filterstäube aus der Aluminiumschrottaufbereitung zugesetzt werden.

7. Verfahren nach einem der Ansprüche 1 bis 6, dadurch gekennzeichnet, daß der Verbrennungsprozeß mit einem Sauerstoffüberschuß von 6 bis 12 Vol.-% ablauft und/oder beim Verbrennungsprozeß die gasförmigen CO-Bestandteile auf weniger als 10 Vol.-% und die C-Anteile in der Flugasche auf weniger als 1 Vol.-% eingestellt werden, wobei vorzugsweise die Umsetzung der Brennstoffe, die noch nicht im Verbrennungsraum erfolgt ist, in einem Nachbrennraum bei Temperaturen zwischen 700°C und 1200°C durchgeführt wird.

8. Verfahren nach einem der Ansprüche 1 bis 7, dadurch gekennzeichnet, daß im Anschluß an die Verbrennung oder die Nachverbrennung das Rauchgas möglichst rasch unter 200°C abgekühlt wird, bevor es gereingt wird, insbesondere zur Abkühlung Wasser feintropfenförmig eingesprüht wird, vorzugsweise mit Tröpfchendurchmessern von weniger als 100 µm und/oder die Abgastemperatur nach Verlassen des Verbrennungsraumes bis zum Eintritt in die Rauchgaswäsche auf mehr als 700°C gehalten wird.

9. Verfahren nach einem der Ansprüche 5 bis 8, dadurch gekennzeichnet, daß der zur Sättigung der Salzschmelze einzustellende halogenaffine Metalloxidanteil durch Zusatz von Kalk zum Waschwasser der Rauchgaswäsche erfolgt und/oder dem Nachreinigungsverfahren Kohlenwasserstoffe zugesetzt werden, die bezogen auf den abgeschiedenen Feststoff 1 bis 300 mg/kg Feststoff betragen, wobei vorzugsweise in der wässrigen Phase der Emulsion durch Zugabe wasserlöslicher basischer Stoffe ein pH-Wert von wenigstens 8 eingestellt wird und/oder die Emulsion in Form von Tröpfchen mit einem Durchmesser von 10 µm bis 500 µm, vorzugsweise 40 bis 100 µm, auf das Rauchgas gesprüht wird und/oder die auf das Rauchgas gesprühte Emulsion pro Kubikmeter durchgesetzten Rauchgases 0,07 l bis 1 l, vorzugsweise 0,3 bis 0,6 l, beträgt.

10. Vorrichtung zur Verbrennung und anschließenden Rauchgasreinigung zur Durchführung des Verfahrens nach einem der Ansprüche 1 bis 9,
bestehend aus einem mit einem Brenner versehenen Brennraum, Zuführeinrichtungen für weitere feste, flüssige und/oder gasförmige Brennstoffe sowie einer nachgeschalteten Einrichtung zur Rauchgasreinigung, dadurch gekennzeichnet, daß die Einrichtung zur Rauchgasreinigung einen Aerosolabscheider (15) aufweist, der eingangsseitig eine mit Düsen (17) ausgestattete Sprüheinrichtung für eine Öl-Wasser-Emulsion aufweist.

11. Vorrichtung nach Anspruch 10, dadurch gekennzeichnet, daß der Aerosolabscheider ein Auffangbecken aufweist, das mit einem Abscheider, vorzugsweise einer Zentrifuge (19), zur Abtrennung der schadstoffbelasteten ölreichen Phase verbunden ist und/oder der Abscheider (19) mit einer Zuführung zum Verbrennungsraum (2, 10) verbunden ist.

12. Vorrichtung nach einem der Ansprüche 10 oder 11, dadurch gekennzeichnet, daß dem Aerosolabscheider (15) ein Naßwäscher (5), vorzugsweise ein Ringspalt-Venturi-Wäscher, vorgeschaltet ist, wobei vorzugsweise der Naßwäscher (15) mit einer Trennvorrichtung (6) verbunden ist, in der die abgeschiedenen Fest-Schadstoffe abtrennbar und vorzugsweise in einen mit der Trennvorrichtung (6) verbundenen Ofen (10) verbrennbar sind.

## Claims

1. Process for reducing the polluting content of flue gas from thermal processes burning fuels containing carbon, hydrogen and halogen in the presence of a oxidising gas phase, in particular in the aluminium remelting process, preferably to reduce to a minimum gaseous, liquid and solid dioxins, furans, halogens or halogen-containing substances, wherein in the combustion process, halogen-affinitive metals and/or their oxides, hydroxides and/or oxyhydroxides are placed in the heating flame and the flue gases leaving the combustion chamber are purified on heat absorption, characterised in that the amount of halogenaffinitive metals and/or their oxides, hydroxides and/or oxyhydroxides is restricted to an amount, which is only 1 to 10% above the amount required stoichiometrically for the transformation and mineral bonding of halogens and/or hydrogen halides in the presence of other reaction partners such as SO₂ in the waste gas, and that for absorption of the noxious substances still present, in particular the dioxins and furans, the flue gases are sprayed with a non-flammable oil-water emulsion.

2. Process according to Claim 1, characterised in that the oil-water percentage by volume of the oil-water emulsion is 0.01 to 90, and an emulsifying agent is preferably added to the oil-water emulsion.

3. Process according to one of Claims 1 or 2, characterised in that the emulsion formed after absorption of the noxious substances, in particular the furans and/or dioxin constituents, is divided into an oil phase containing the furan and/or dioxin constituents and an aqueous phase, preferably in a centrifuge, in which case the separated oil phase containing noxious substances is then, after separation of the solids contained therein, preferably passed into a combustion chamber either completely or partially as fuel and is burned there, and/or the aqueous phase and/or the components of the emulsion free from noxious substances are returned to the process once more to form an oil-water emulsion.

4. Process according to one of Claims 1 to 3, characterised in that the waste gases are sprayed with the oil-water emulsion in an aerosol separator before they pass through a wet filter or wet filter packs, preferably the waste gases are subjected to wet purification, preferably in a Venturi washer, before they are passed into the aerosol separator, in which case more than 99% of the dioxins and/or furans present in the flue gas are washed out.

5. Process according to Claim 4, characterised in that the solids containing dioxins and/or furans separated in the washer from the waste gas of the thermal process are separated from the purification liquid and are fused in a saturated salt melt, which contains halogen-affinitive metal oxides, hydroxides and/or oxyhydroxides and preferably is also made up essentially of sodium chloride, potassium chloride, calcium chloride and halides formed or used in the process and washed out of the waste gas, and other solids, wherein the dioxins and furans are destroyed, wherein preferably the salt melt is exposed to a temperature of 700° to 900°C in order to transform or destroy the dioxins and/or furans contained in the solid by removing the halogen and by reaction with the halogen-affinitive substances, and/or the waste gases formed during combustion of the salt melt undergo flue gas purification, preferably in a wet wash and/or by spraying with an oil-water emulsion.

6. Process according to one of Claims 1 to 5, characterised in that the fine-particle metals added are from the group of elements K, Ca, V, Cr, Mn, Fe, Ni, Cu, Zn, Na, Mg, Al, Sn, Ba, Ti, W, Mo, and/or other oxides, hydroxides or oxyhydroxides, but preferably Mn, Fe, Zn, Mg, Al in pure form or as a mixture, in particular dross, preferably from aluminium remelting processes and/or filter dusts from the upgrading of aluminium waste.

7. Process according to one of Claims 1 to 6, characterised in that the combustion process proceeds with an excess of oxygen of 6 to 12% by vol. and/or in the combustion process the gaseous CO constituents are set at less than 10% by vol. and the C components in the flue ash to less than 1% by vol., wherein preferably the transformation of the fuels which has not yet occurred in the combustion chamber is carried out in a secondary combustion chamber at temperatures between 700° and 1200°C.

8. Process according to one of Claims 1 to 7, characterised in that subsequent to combustion or secondary combustion, the flue gas is cooled as rapidly as possible to below 200°C before it is purified, in particular fine droplets of water, preferably with droplet diameters of less than 100 µm, are sprayed in for cooling, and/or the waste gas temperature after leaving the combustion chamber is maintained at more than 700°C until it enters the flue gas wash.

9. Process according to one of Claims 5 to 8, characterised in that the halogen-affinitive metal oxide component for adjusting saturation of the salt melt is provided by adding lime to the purification water of the flue gas wash, and/or hydrocarbons are added to the secondary combustion process in the amount of 1 to 300 mg/kg, calculated on the basis of the separated solid, wherein preferably in the aqueous phase of the emulsion a pH value of at least 8 is set by adding water-soluble base substances, and/or the emulsion is sprayed onto the flue gas in the form of droplets with a diameter of 10 µm to 500 µm, preferable 40µm to 100 µm, and/or the amount of emulsion sprayed onto the flue gas per cubic metre of flue gas passed through is 0.07 l to 1 l, preferably 0.3 to 0.6 l.

10. Arrangement for the combustion and subsequent purification of flue gas for implementing the process according to one of Claims 1 to 9, comprising a combustion chamber fitted with a burner, supply means for further solid, liquid and/or gaseous fuels and a means for flue gas purification connected downstream, characterised in that the means for flue gas purification has an aerosol separator (15), which on its inlet side has a spray arrangement fitted with nozzles (17) for an oil-water emulsion.

11. Arrangement according to Claim 10, characterised in that the aerosol separator has a collecting tank, which is connected to a separator, preferably a centrifuge (19), for separation of the oil-rich phase containing noxious substances, and/or the separator (19) is connected to a supply pipe to the combustion chamber (2, 10).

12. Arrangement according to one of Claims 10 or 11, characterised in that a wet washer (5); preferably a cylindrical Venturi washer, is connected upstream of the aerosol separator (15), in which case the wet washer (15) is preferably connected to a separation device (6), in which the separated solid noxious substances may be separated and preferably burned in a furnace (10) connected to the separation device (6).

## Revendications

1. Procédé de réduction de la teneur en substances polluantes de gaz de fumée dégagés pendant des processus thermiques, en présence d'une phase gazeuse oxydante de combustibles carbonés, hydrogénés, acides et halogénés dégagés pendant des processus de combustion, en particulier au cours du processus de fusion d'aluminium, destiné de façon privilégiée à réduire des dioxines, des furanes, des halogènes gazeux, liquides ou solides ou des matières halogénées, des métaux affines à l'halogène et/ou leurs oxydes, hydroxydes et/ou leurs oxyhydroxydes étant introduits en fines particules au cours du processus de combustion et les gaz de fumée quittant la chambre de combustion étant épurés en éliminant la chaleur, caractérisé en ce que la quantité de métaux affines à l'halogène et/ou leurs oxydes, hydroxydes et/ou leurs oxyhydroxydes est limitée à une quantité qui n'est supérieure que de 1 à 10 % à celle qui est stoechiométriquement indispensable à la transformation et à la séparation minérale d'halogènes et/ou d'hydrogènes halogénés en présence d'autres partenaires réactionnels comme le SO₂ dans le gaz résiduaire et en ce que les gaz de fumée sont aspergés d'une émulsion non inflammable huile-dans-eau pour absorber les substances polluantes restantes, en particulier les dioxines et les furanes.

2. Procédé selon la revendication 1, caractérisé en ce que l'émulsion huile-dans-eau présente un taux des volumes d'huile et d'eau de 0,01 à 90, un émulsifiant étant de préférence additionné à l'émulsion huile-dans-eau.

3. Procédé selon l'une des revendications 1 ou 2, caractérisé en ce que l'émulsion présente après l'absorption des substances polluantes, en particulier des constituants de furanes et/ou de dioxines, est séparée en une phase huileuse contenant les constituants de furanes et/ou de dioxines et en une phase aqueuse, de façon privilégiée dans une centrifugeuse, la phase huileuse séparée et chargée de substances polluantes étant amenée, également de façon privilégiée et après séparation des substances solides qu'elle renferme, entièrement ou partiellement en tant que combustible dans une chambre de combustion et/ou la phase aqueuse et/ou les constituants de l'émulsion, exempts de substances polluantes étant réintroduits dans le processus pour former à nouveau une émulsion huile-dans-eau.

4. Procédé selon l'une des revendications 1 à 3, caractérisé en ce que les gaz résiduaires sont aspergés de l'émulsion huile-dans-eau dans un piège aérosol, avant de traverser un filtre humide ou des paquets de filtres humides, et en ce que, de façon privilégiée, les gaz résiduaires sont soumis, avant d'être dirigés dans le piège aérosol, à une épuration par voie humide, de préférence dans un laveur de Venturi, plus de 99 % des dioxines et/ou des furanes produits dans le gaz de fumée étant enlevés par lavage.

5. Procédé selon la revendication 4, caractérisé en ce que les substances solides contenant des dioxines et/ou des furanes et séparées, dans le laveur, du gaz résiduaire dégagé pendant le processus thermique sont séparées du liquide laveur et fondues dans des sels fondus saturés, contenus avec des oxydes et des hydroxydes métalliques affines à l'halogène et/ou des oxyhydroxydes affines à l'halogène et qui se composent du reste, de façon privilégiée et pour l'essentiel, de chlorure de sodium, de chlorure de potassium, de chlorure de calcium et d'haloîdes formés ou introduits pendant le processus et enlevés du gaz résiduaire par lavage, ou d'autres substances, les dioxines et les furanes étant détruits et, de façon privilégiée, les sels fondus étant soumis à une température de 700 à 1100° C et, de préférence, de 800 à 900° C, pour transformer ou détruire les dioxines et/ou les furanes contenus dans la substance solide par élimination de l'halogène et réaction avec les substances affines à l'halogène, et/ou les gaz résiduaires produits lors de la combustion des sels fondus étant soumis à une épuration du gaz de fumée, de façon privilégiée dans un laveur par voie humide et/ou par aspersion d'une émulsion huile-dans-eau.

6. Procédé selon l'une des revendications 1 à 5, caractérisé en ce que les métaux à fines particules ajoutés lors de la combustion sont choisis dans le groupe des éléments K, Ca, V, Cr, Mn, Fe, Ni, Cu, Zn, Na, Mg, Al, Sn, Ba, Ti, W, Mo et/ou de leurs oxydes, hydroxydes ou oxyhydroxydes, mais, de façon privilégiée, dans les Mn, Fe, Zn, Mg, Al sous forme pure ou en tant que mélange, en particulier dans les mâchefers, produits de préférence à partir de processus de fusion de l'aluminium et/ou des poussières de filtration provenant de la préparation de ferrailles d'aluminium.

7. Procédé selon l'une des revendications 1 à 6, caractérisé en ce que le processus de combustion se déroule avec un excédent d'oxygène de 6 à 12 % volumétriques et/ou en ce que, au cours du processus de combustion, les composants gazeux du CO sont amenés à moins de 10 % volumétriques et la teneur en C de la cendre volante à moins de 1 % volumétrique, la décomposition des combustibles qui ne s'est pas encore produite dans la chambre de combustion s'effectuant de façon privilégiée dans une chambre de post-combustion, à des températures qui se situent entre 700° C et 1200° C.

8. Procédé selon l'une des revendications 1 à 7, caractérisé en ce que, en liaison avec la combustion ou la post-combustion, le gaz de fumée est refroidi le plus rapidement possible en dessous de 200° C avant d'être épuré, en ce que, en particulier pour le refroidissement, de l'eau est aspergée sous forme de fines gouttes, le diamètre de ces dernières étant de préférence inférieur à 100 µm et/ou en ce que la température du gaz résiduaire qui a quitté la chambre de combustion est maintenue à plus de 700° C jusqu'à son entrée dans le laveur du gaz de fumée.

9. Procédé selon l'une des revendications 5 à 8, caractérisé en ce que la teneur en oxyde métallique affine à l'halogène et à ajuster pour saturer les sels fondus est obtenue par addition de chaux à l'eau d'épuration du laveur du gaz de fumée et/ou en ce que des hydrocarbures qui contiennent 1 à 300 mg/kg de substance solide, par rapport à la substance solide séparée, sont ajoutés au procédé d'épuration ultérieure, une valeur de pH de moins de 8 étant ajustée de façon privilégiée pendant la phase aqueuse de l'émulsion, par addition de substances basiques solubles dans l'eau, et/ou en ce que l'émulsion sous forme de gouttelettes d'un diamètre de 10 à 500 µm, de préférence de 40 à 100 µm, est aspergée sur le gaz de fumée et/ou en ce que l'émulsion aspergée sur le gaz de fumée est de 0,07 à 1 l et, de préférence, de 0,3 à 0,6 l par mètre cube de gaz de fumée traversé.

10. Dispositif de combustion et d'épuration ultérieure du gaz de fumée pour la mise en oeuvre du procédé selon l'une des revendications 1 à 9, se composant d'une chambre de combustion munie d'un brûleur, de dispositifs d'amenage d'autres combustibles solides, liquides et/ou gazeux ainsi que d'un dispositif placé en aval et destiné à l'épuration du gaz de fumée, caractérisé en ce que le dispositif d'épuration du gaz de fumée présente un séparateur à aérosol (15) qui est muni, du côté de l'entrée, d'un dispositif d'aspersion pour une émulsion huile-dans-eau, équipé de tuyères (17).

11. Dispositif selon la revendication 10, caractérisé en ce que le séparateur à aérosol présente un bassin de réception qui est relié à un séparateur et, de façon privilégiée, à une centrifugeuse (19), pour la séparation de la phase grasse et chargée de substances polluantes et/ou en ce que le séparateur (19) est relié à une conduite se dirigeant vers la chambre de combustion (2, 10).

12. Dispositif selon l'une des revendications 10 ou 11, caractérisé en ce qu'un laveur par voie humide (5), de façon privilégiée un laveur de Venturi avec passage annulaire, est placé en amont du séparateur à aérosol (15), le laveur par voie humide (15) étant relié de façon privilégiée à un dispositif de séparation (6) dans lequel les substances polluantes solides séparées peuvent être détachées et, de façon privilégiée, brûlées dans un four (10) relié au dispositif de séparation (6).
